# EUROPEAN PATENT SPECIFICATION

(11) **EP 1 404 620 B1**
(45) Date of publication and mention of the grant of the patent: **25.10.2006**
(21) Application number: 00920966.9
(22) Date of filing: 03.05.2000
(51) Int. Cl.: C02F 3/16, B01F 3/04

(54) **ELECTROMECHANICAL AERATOR FOR AERATION OF LIQUIDS**
ELEKTROMECHANISCHE BELÜFTER FÜR BELÜFTUNG VON FLÜSSIGKEITEN
AERATEUR ELECTROMECANIQUE POUR L'AERATION DE LIQUIDES

(43) Date of publication of application: 07.04.2004
(73) Proprietor: Van Gucht, Roland, ir., B-1851 Grimbergen (BE)
(72) Inventor: Van Gucht, Roland, ir., B-1851 Grimbergen (BE)
(86) International application number: PCT/IB2000/000566
(87) International publication number: WO 2001/083383

(56) References cited:
- WO-A-99/01386
- DE-U- 9 103 151
- FR-A- 2 338 072
- US-A- 4 350 648
- US-A- 4 358 413

## Description

The invention is related to an aerator with immerged electrical motor pump and with uniform liquid distribution/aeration system above the liquid level, which can be used in all kind of aeration applications in any kind of liquid like as in wastewater and groundwater and in very low liquid levels.

There are known aerators with electrical motor above the liquid level which are floating on the liquid surface or fixed above the liquid level. There are also known mechanical aerators with immerged electrical motor with aeration distribution beneath liquid level. There is also the so-called " Dresdner aerator " which is applied in groundwater winning plants where the water splash from above against a plate and there are the spray aerators, which discharge through special nozzles.

The document with EPO application N° 95202690.4 (EP-A-0767144) represents an apparatus for sewage treatment with trickling filter which only utilise this system especially for distribution system and recycling of the treated water over the trickling filter.

The document US 4 350 648 describes a floating aerator without discharge pipe and without a immersion pump and is also not composed with an immersion pump with discharge pipe. The dispersion height above the liquid of this floating aerator is limited. This aerator can not evacuate the water to another tank.

The document US 4 358 413 A represents an floating aerator device composed of an immersion motor with screw enclosed by a suction tube 12 or 12a with delivery nozzle. The motor 15 is placed beneath the propeller 17 and also equipped with a suction pipe and not with a discharge pipe.

The aerator works with a primary flow and a secondary flow. The dispersion height above the liquid of this aerator is limited due to this secondary flow. There is no ambient air suction through pipes or venturi system on this aerator. This aerator can not evacuate the water to another tank.

In our application there is only a primary liquid flow through a discharge pipe. The dispersion height above the liquid of our aerator is unlimited (depending of the available pressure height of the immersion pump and the length of the discharge pipe)

The document FR 2 338 072 A represents an aerator device with motor above the liquid.

The dispersion height of FR 2 338 072 A above the liquid of this aerator is also limited. The air through the pipes 12 and 12' is sucked in the suction section beneath the propeller 10 (= dispositif de circulation) and not in the discharge.

The immersion depth is limited due to the limitation of length of a rotating shaft.

In our application there is no limitation of immersion depth due to a static discharge pipe. The distribution plate 6 is equipped with blades 8 and 8' and rotates.

The distribution plate V of our application is fixed and don't rotate and has no blades.

In our aerator-option as you will remark the air is sucked in a venturi system placed in the discharge pipe of the pump, what has a much greater effect of suction due to the greater pressure differences in the venturi system.

This aerator can not evacuate the water to another tank.

The object of the present invention is to partly use the distribution system described in the EPO application N° 95202690.4 (EP-A-0767144) for a trickling filter as an aeration system in order to improve the aeration capacity and to add another function on an aeration system particularly the evacuation of a part of the discharged liquid that passes through the aerator.

This aeration system is composed of an immersion pump equipped with her discharge pipe device and the regulation plate for the distribution with aeration of the liquid.

The liquid is distributed above the liquid level by an immersion pump which is placed in the liquid. The liquid is pumped against a regulation plate so that the liquid is distributed above the surface of the liquid level.

Due to the liquid velocity of the liquid stream against this regulation plate liquid jets are formed which are dispersed over all ( or a part of) the surface of the tank. Due to this dispersion ambient air is introduced in the liquid.

Changing the distance between the fixation plate and the regulation plate we can easily regulate the aeration capacity.

In option one we install in the discharge pipe a T-piece so that an amount of pumped liquid can be recycled (for example in activated sludge system for recycling the activated sludge). Changing the distance between the fixation plate and the regulation plate in combination eventually with the optional regulating device we can regulate the aeration/evacuation capacity of the aerator.

In option two we can increase the aeration capacity by installing in the discharge pipe a venturi system. This venturi system sucks ambient air (or oxygen) from above the liquid level. The advantages offered by this invention are the simplicity and the flexibility. The deeper the liquid level the greater the aeration capacity, due to the capacity/height characteristic of the centrifugal impeller of the immerged pump. In the same way the lower the liquid level, the smaller the aeration capacity.

This aerator works also with very low liquid level (a few centimetres - this depends only of the pump manufacturer working conditions)

They are also other advantages. This aerator can be put in any kind basin, floating in the liquid by means of floating device or stand with the pump base on the bottom of the tank. This aerator can also be used as a liquid mixer.

This simplicity and flexibility result in low investment price so that it is a very interesting aerator especially for applying in small domestic wastewater plants.

The invention shall be explained below with the help of following drawing.

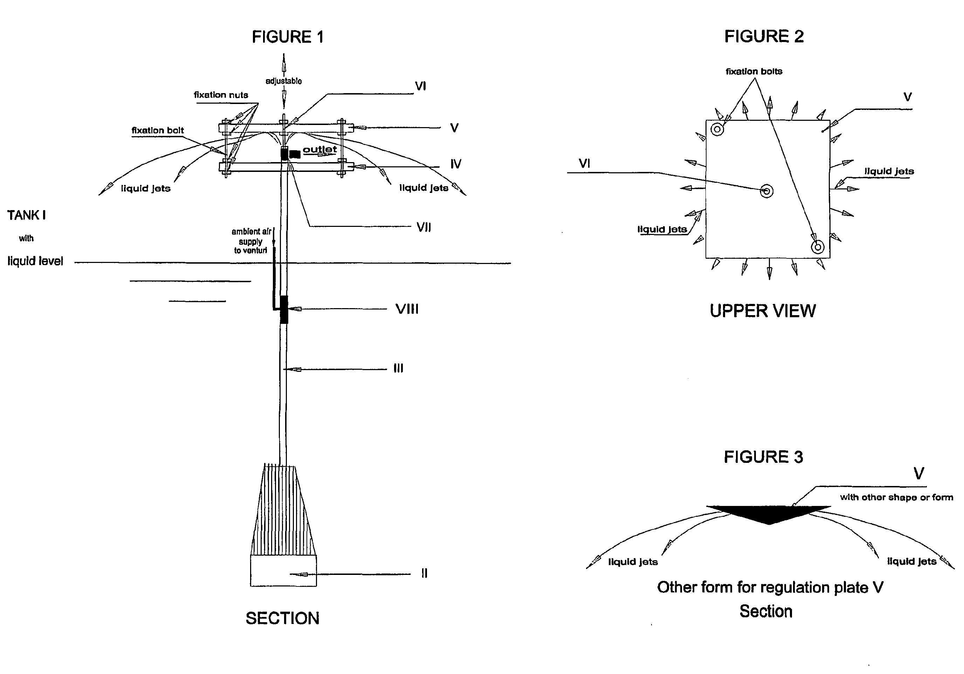

Following sheet with figures illustrates the aerator installed in a liquid at a certain liquid level of the tank. Figure 1 shows a vertical section and figure 2 an upper view.

In the figure 2 a square form for the plate is drawn, but another form (round) or shape is also possible (see figure 3). Also 2 fixation bolts are drawn but this quantity can be more.

With reference to these figures, reference numeral denominates the tank with the liquid which has to be aerated (or mixed).

The immersion pump II, the discharge pipe III, the fixation plate IV, the regulation plate V with optional regulation device VI, the optional T-piece VII, the optional venturi VIII.

The operation principle of the aerator is the following.

When the liquid level is sufficiently high (depends of pump manufacturer instructions) the immerged pump II starts to pump. At that moment the treated liquid is pumped through the pump discharge pipe III against the regulation plate V.

Due to the liquid velocity of the liquid stream against this plate V liquid jets are formed which are dispersed over all (or a part of) the surface of the tank I. Due to this dispersion ambient air is introduced in the liquid.

Changing the distance between the fixation plate IV and the regulation plate V regulate the aeration capacity.

By using the optional T-piece VII in the discharge pipe III, a certain amount of the pumped liquid is due to the hydraulic pressure losses evacuated through the T-piece VII eventually in combination with optional regulating device VI.

The amount of the liquid evacuated (recycled) through the T-piece VII can be regulated by the regulation device VI (bolt or similar) and/or by changing the distance between the fixation plate TV and the regulation plate V by means of the fixation bolts and nuts.

If the aeration capacity by dispersion is not sufficient, a venturi VIII can be installed in option in the discharge pipe III in order to suck ambient air (or oxygen) above the liquid level into the venturi VIII.

The form and shape of the regulation plate V can be chosen shaped instead of flat (as in figure 1) and rectangular instead of square (as in figure 2) in order to obtain better dispersion and also greater oxygen efficiency and capacity (as for example in figure 3).

## Claims

1. An electromechanical aerator consisting of an immersion pump equipped with her discharge pipe device, fixation and the regulation plate for the distribution with aeration of the liquid whereby the fixation and the regulation plate are completely above liquid level.

2. An electromechanical aerator consisting of an immersion pump equipped with her discharge pipe device, fixation and regulation plate for the distribution with aeration of the liquid and T-piece in order to evacuate the liquid to another tank during aeration whereby the T-piece, fixation and the regulation plate are completely above liquid level.

3. An electromechanical aerator according to claim 1 or claim 2 with venturi system in the discharge pipe for increasing of the aeration capacity.

4. Application of the electromechanical aerator according to claims 1, 2, or 3 for the aerobic treatment of biological degradable waste water of individual houses, small industrial plants or other sources of biological degradable wastewater.

5. Application of the electromechanical aerator according to claims 1, 2 or 3 for the aerobic treatment of liquor from manure of farms.

6. Application of the electromechanical aerator as mixing system according to claims 1, 2 or 3 and in any kind of liquids.

7. Application of the electromechanical aerator as aeration/evacuation system according to claims 1, 2 or 3 in all kind of liquids.

## Patentansprüche

1. Ein electromechanische Belüfter bestehendes aus einer Tauchpumpe mit Druckleitung, Fixationsplatte und Regelplatte für die Verteilung mit Belüftung der Flüssigkeit wobei die Fixationsplatte und Regelplatte sich komplett über der Flüssigkeit befinden.

2. Ein electromechanische Belüfter bestehendes aus einer Tauchpumpe mit Druckleitung, Fixationsplatte und Regelplatte für die Verteilung mit Belüftung der Flüssigkeit und ein T-Stuck zur Abführen von Flüssigkeit nach einem anderen Behälter wobei das T-Stuck, mit Fixationsplatte und Regelplatte sich komplett über der Flüssigkeit befinden.

3. Ein electromechanische Belüfter gemäss Anspruch 1 oder Anspruch 2 mit Venturi-System in der Druckleitung für Erhöhung von der Belüftungskapazität.

4. Anwendung vom einem electromechanische Belüfter gemäss Anspruch 1, 2 oder 3 für der biologische Reinigung von biologische abbaubaren Abwasser von privaten Hausen, kleine Gewerben oder anderen Quellen von biologischen abbaubaren Abwasser.

5. Anwendung vom einem electromechanische Belüfter gemäss Anspruch 1, 2 oder 3 für der biologische Reinigung von Dünger von Bauernhofen.

6. Anwendung vom einem electromechanische Belüfter wie Misch-System gemäss Anspruch 1, 2 oder 3 in irgendeiner Art von Flüssigkeiten.

7. Anwendung vom einem electromechanische Belüfter wie Belüftungs/Abführungs-System gemäss Anspruch 1, 2 oder 3 in irgendeiner Art von Flüssigkeiten.

## Revendications

1. Un aérateur électromécanique consistant d'une pompe immergée équipée avec son système de refoulement, la plaque de fixation et de la plaque de régulation pour la répartition avec aération du liquide avec la plaque de fixation et de régulation complètement au-dessus du niveau de liquide.

2. Un aérateur électromécanique consistant d'une pompe immergée avec son système de refoulement, la plaque de fixation et de régulation pour la répartition avec aération du liquide et avec pièce T afin de évacuer le liquide vers un autre réservoir pendant l'aération avec la plaque de fixation et de régulation complètement au-dessus du niveau de liquide.

3. Un aérateur électromécanique en concordance avec revendication 1 ou 2 avec système de venturi dans le tuyau de refoulement afin d'augmenter la capacité d'oxygène.

4. Application de l'aérateur électromécanique en concordance avec revendications 1, 2 ou 3 pour le traitement aérobie des eaux résiduaires biodégradables de maisons individuelles, petits industries ou d'autres sources d'eaux résiduaires.

5. Application de l'aérateur électromécanique en concordance avec revendications 1, 2 ou 3 pour le traitement aérobie du lisier des fermiers.

6. Application de l'aérateur électromécanique en concordance avec revendications 1,2 ou 3 comme système de mélange dans n'importe quelle liquide.

7. Application de l'aérateur électromécanique en concordance avec revendications 1,2 ou 3 comme système de l'aération dans n'importe quelle liquide.
